Europäisches Patentamt

European Patent Office

Office européen des brevets

(19)

(11) Publication number : **0 043 256**
**B1**

(12)

# EUROPEAN PATENT SPECIFICATION

(45) Date of publication of patent specification :
21.03.84

(51) Int. Cl.³ : **F 16 K 31/06**, F 23 N   1/00

(21) Application number : **81302897.4**

(22) Date of filing : **26.06.81**

(54) **A proportional control valve for gas and a proportional control system comprising the valve.**

(30) Priority : **01.07.80 JP 90453/80**
**01.07.80 JP 90454/80**

(43) Date of publication of application :
**06.01.82 Bulletin 82/01**

(45) Publication of the grant of the patent :
**21.03.84 Bulletin 84/12**

(84) Designated contracting states :
**DE FR GB IT**

(56) References cited :
**FR-A- 1 059 620**
**FR-A- 1 510 112**
**FR-A- 2 110 603**
**FR-A- 2 307 208**
**US-A- 2 884 009**
**US-A- 3 068 902**
**US-A- 3 115 891**

(73) Proprietor : **TOHOKU MIKUNI KOGYO COMPANY
LIMITED**
**309, Aza-Sotoyama, Daihachi Chiwari**
**Oaza-Takisawa, Takisawa-Mura**
**Iwate-Gun Iwate-Ken (JP)**

(72) Inventor : **Sugawara, Akira .**
**12-32, 4-chome Midorigaoka**
**Morioka-Shi Iwate-Ken (JP)**
Inventor : **Okamura, Kazuo**
**7-187, Aza-Mukaishinden Daijugo Chiwari Oaza-Ukai**
**Takisawa-Mura Iwate-Gun Iwate-Ken (JP)**

(74) Representative : **Szczuka, Jan Tymoteusz**
**Cruikshank & Fairweather 19 Royal Exchange Square**
**Glasgow G1 3AE Scotland (GB)**

A proportional control valve for gas and a proportional control system comprising the valve

The invention relates to a proportional control valve adapted to adjust the clearance between a valve member and a valve seat at the time of the minimum flow rate of gas. Particularly it relates to a control system adapted to control the flow rate of gas according to the kind of gas including LPG, natural gas and town gas (produced gas) with which valve is used.

In US-A-3.115.891 is shown a fluid flow control valve provided with a solenoid actuator for controlling the clearance between a valve member and a valve seat, said clearance being adjusted from the outside of a valve body by moving said valve seat relative to said valve member.

Recently, forms of gas apparatus having proportional control function have been developed with a view to increasing their convenience or saving energy.

At present, several kinds of gases are placed on the market, including liquefied petroleum gas (LPG), natural gas and town gas. Because they are different in heating value per unit volume and supply pressure, it is impossible to provide a proportional control valve or system usable, as it is, for all the gases. Measures actually taken to cope with it include replacing some component parts thereof according to the kinds of gases and providing the valve or system with an adjusting mechanism.

The main function of a proportional control valve for gas is to control gas pressure at a nozzle provided downstream independent of the shapes of its valve member and valve seat, that is, to control the clearance (open area) between the valve member and the valve seat since, in short, the supply pressure of gas minus pressure loss by the proportional control valve is equal to the gas pressure at the nozzle.

If an actuator such as a solenoid is used (see e. g. FR-A-2.307.208), the valve member moves with a movable member incorporating a plunger, and the displacement thereof depends upon the balance between the solenoid force of attracting the plunger and the counterforce of a spring or a permanent magnet, or between the force of a first solenoid and the counterforce of a second solenoid. This means that the valve member changes its position even when any other slight force is applied to the valve member or the plunger. Since the proportional control valve controls the pressure loss caused thereby by controlling the clearance between the valve member and the valve seat as mentioned above, a pressure difference naturally exists between portions before and after the valve, said pressure difference displacing the valve member from the position where the attracting force of the solenoid and the aforesaid counterforce are balanced with each other.

Also, if large or different frictional forces are exerted on, for example, the plunger, valve member or valve stem, the frictional forces affect the displacement of the valve member. It is generally known that the proportional control valve essentially has such characteristics.

The proportional control valve is required to have the following abilities :

1) to ensure the minimum flow rate of gas corresponding to the minimum limit of stable combustion which depends upon a burner,

2) to adapt itself to different kinds of gases economically and easily, and

3) to respond quickly to the input signal of the actuator.

Recently, the energy situation has changed, and with the increase of urban population it has become impossible to meet the demand by supplying conventional gases through existing gas piping. Therefore, the conventional gases have been replaced by gases having higher heating values per unit volume. In conventional forms of gas apparatus, the nozzle is replaced and the secondary pressure of the pressure regulator is readjusted to cope with the change of gases. Even if the forms of gas apparatus are complicated, it is desirable that they can be adapted for different kinds of gases as easily as possible.

Most of conventional proportional control valves comprise a flat valve as shown in Figure 15. The maximum open area of the valve depends upon the inside diameter of a valve seat. Let us suppose that the inside diameter of the valve seat is Di and the displacement of the valve member is S. Then, the displacement Smax of the flat valve which gives the maximum open area is obtained as follows :

$$\pi/4\ Di^2 = \pi DiSmax$$

$$Smax = D\,i/4$$

The inside diameter of the valve seat depends upon the minimum allowable pressure loss by the proportional control valve and the maximum flow rate of gas. Therefore, to make a gas apparatus of a certain output usable for all kinds of gases, it is necessary to use a valve member and a valve seat suitable for a gas with the highest flow rate (a gas having the smallest heating value per unit volume), not for a gas with a lower flow rate (a gas having a larger heating value per unit volume).

Thus, said Smax corresponding to each gas is smaller than the value obtained above, and said Smax differs according to the kinds of gases. Furthermore, the force exerted on the valve member by the pressure difference between portions before and after the valve is widely different according to the supply pressure of gas. Also, the relationship between the input signal of the actuator and the heat flow rate of gas, as well as the sensitivity, is different according to the kind of gas employed. Therefore, it is very difficult to adapt the proportional control valve to suit different kinds of gases.

Conventional forms of gas apparatus generally ON-OFF controlled, are handled on the basis that the flow rate of gas is constant. In case of proportional control, however, the flow rate of gas is continuously changed between maximum and minimum. In this case, if the flow rate of gas is reduced when gas is burning, the flame of gas becomes smaller, and is liable to be blown out by wind and cause backfire or incomplete combustion. Therefore, the flow rate of gas must not be reduced beyond a limit of stable combustion. In case of a flat valve, the flow rate of gas generally changes remarkably as compared with the displacement of the valve member, and even a very small error in the clearance between the valve member and the valve seat seriously affects the flow rate of gas. Therefore, a bypass for controlling the minimum flow rate of gas is provided in addition to the main valve. When gas is flowing at the minimum flow rate, the main valve is closed and only the bypass is opened.

When the kind of gas is changed, both the main valve and the bypass are replaced, or alternatively only the main valve is replaced and a needle valve or the like provided in the bypass is readjusted.

A solenoid is generally used as the actuator of the proportional control valve for gas. The strength of input signals given to the solenoid differs according to the load of the gas apparatus. When an input signal is given to the solenoid, it generates an attracting force and pulls in, for example, a plunger. In a state where the attracting force of the solenoid is balanced with the counterforce of a spring, the valve member stops.

Thus, the force exerted on the stationary valve member is zero. Even slight friction on components such as the plunger or valve stem, gives rise to the problem that the performance characteristics of the valve (the relationship between the input signal and the valve displacement) become unstable and delays the response. If the valve stem is inclined, a further problem arises in that the clearance between the valve member and the valve seat becomes inaccurate particularly when the flow rate of gas is low, and the precision of control is affected.

An object of the present invention is to provide an improved form of proportional control valve which can be readily adjusted to enable it to be employed with different kinds of gases.

According to the present invention there is provided a proportional control valve for gas, adapted to control the flow rate of gas by controlling the clearance between a valve member and a valve seat and provided with an actuator such as a solenoid for actuating said valve member, said clearance being adjusted from the outside of a valve body by moving said valve seat relative to said valve member, characterized in that a spacer having a shape which does not hinder the flow of gas is disposed within an upper valve chamber upstream from said valve seat, a spring for urging said valve seat upwardly so as to keep the top of said valve seat in contact with the bottom of said spacer is disposed within a lower valve chamber downstream from said valve seat, and said valve body is provided at its top with a vertical adjusting mechanism for controlling the minimum clearance between said valve member and said valve seat by vertically moving said spacer according to the kind of gas for which the valve is to be used.

According to a further aspect of the present invention there is provided a proportional control system for gas comprising a said valve with a solenoid actuator, characterised in that there are provided means for changing the range of control current to said actuator according to the kind of gas used.

As a result of the present invention, an optimum minimum flow rate can be obtained according to the kind of gas being used, said valve member and said valve seat being out of contact with each other in the throttle stroke in order to lengthen the service life of said valve member.

Embodiments of the present invention will now be described, by way of example, with reference to the accompanying drawings in which :

Figure 1 is a vertical sectional view of one embodiment of a proportional control valve according to the invention,

Figure 2 is a perspective view of a spacer incorporated in the valve of Figure 1,

Figure 3 is a transverse sectional view taken on line III-III of Figure 1,

Figure 4 is a partial sectional view of a second embodiment of the invention,

Figure 5 is a diagram of gas flow rate characteristics in a proportional control valve of the invention,

Figure 6 is a block diagram of a proportional control system of the invention,

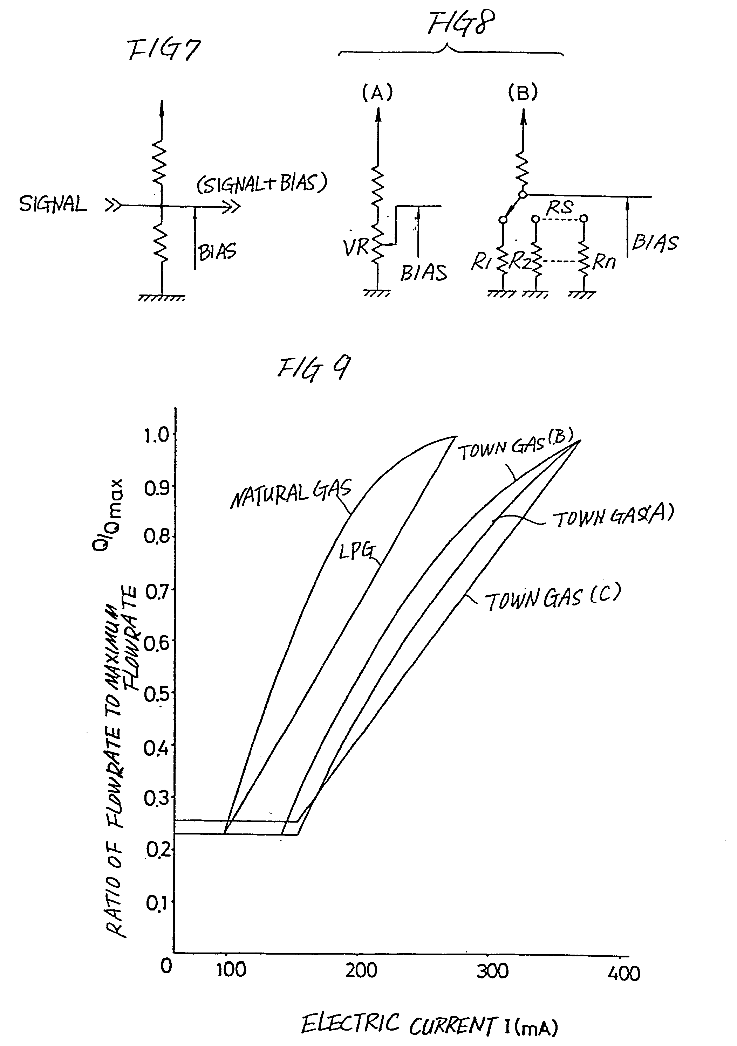

Figure 7 is a circuit diagram of a starting current setting portion for a solenoid,

Figure 8 is a circuit diagram of a maximum exciting current setting portion for a solenoid,

Figure 9 is a diagram showing the relationship between the input signal of the solenoid and the ratio of flow rate to the maximum flow rate,

Figure 10 is a diagram showing the relationship between the input signal of the solenoid and the flow rate of LPG,

Figures 11 to 14 respectively show various forms of bearing means for movable members in a proportional control valve of the invention, and

Figure 15 is a sectional view of a conventional proportional control valve.

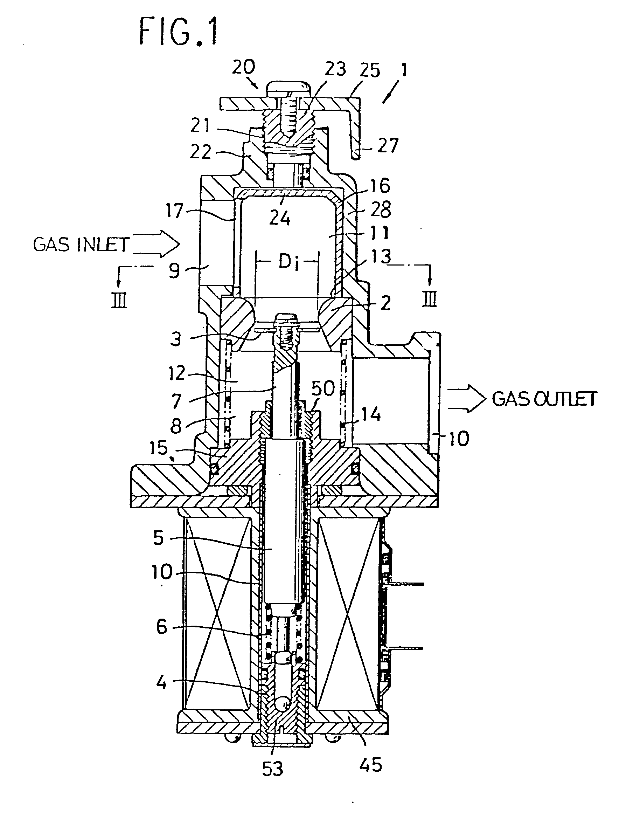

Referring to Figure 1, which illustrates an example of a proportional control valve for a gas apparatus, a body 1 thereof contains a detachable female conical valve seat 2 and a co-operating disc-shaped valve member 3 corresponding thereto. The body 1 further contains in its lower portion a solenoid 4, and movable member incorporating a plunger 5 adapted to move vertically by relation between the attracting force of the solenoid 4 and the counterforce of a spring 6. A valve stem 7 extends integrally from the upper end of the plunger 5 to be movable therewith, and said valve member 3 is fixed to the valve stem 7. The combination of the valve member 3 and the valve seat 2 is not restricted to the disc-shaped valve and the female conical valve seat, and can, for example, be the disc-shaped valve or a poppet valve and a valve seat having a circular hole (See Figure 15).

Gas, the pressure of which has been regulated by a gas pressure regulator (not shown), enters a valve chamber 8 through an inlet 9 passing through the clearance between the valve seat 2 and the valve member 3, the flow rate thereof being controlled thereby. The gas then comes out of the valve through an outlet 10, and flows towards a gas burner.

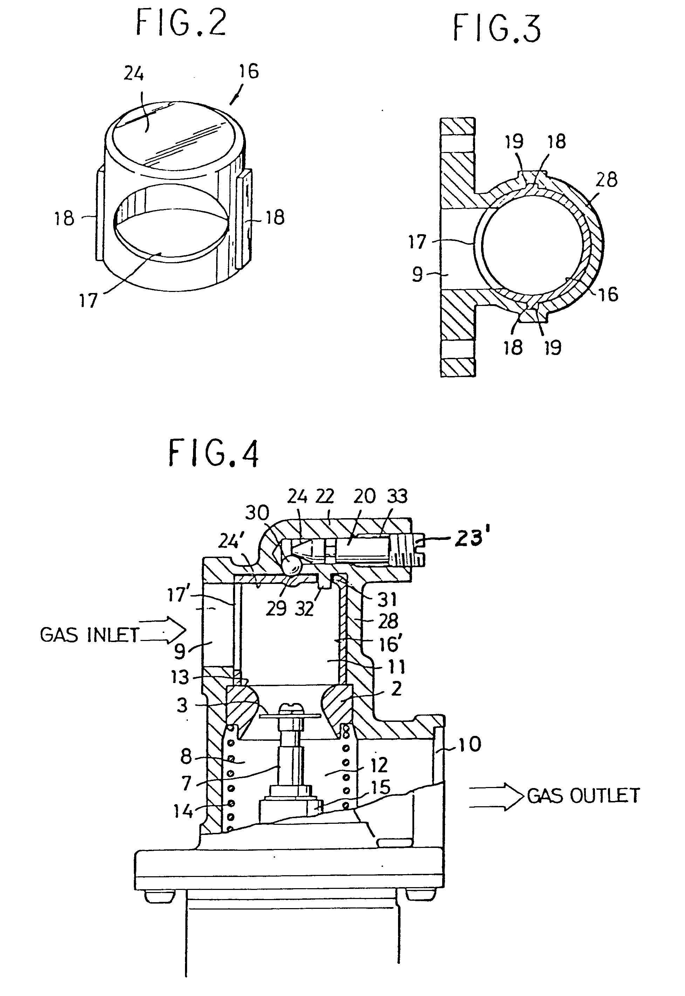

Said valve chamber 8 within the body 1 is divided into an upper valve chamber 11 having a small diameter and a lower valve chest 12 having a large diameter, said valve seat 2 being disposed at a step portion 13 between them. Said valve seat 2 is urged upwardly within the valve chamber 8 by a spring 14 which is provided between the bottom of the valve seat 2 and a plunger guide member 15 fitted in a lower portion of the body 1. A cylindrical spacer 16, with an open lower end as shown in Figure 2, is fitted in the upper valve chamber 11. The lower end of the spacer 16 is kept in contact with the upper circumference of the valve seat 2. The spacer 16 is provided on its side facing the gas inlet 9 with an opening 17, and on its other sides with ribs 18 which ensure that the opening 17 always coincides with the gas inlet, 9. The ribs 18 engage with vertical guide slots 19 (Figure 3) formed on the inner wall of the upper valve chamber 11.

The proportional control valve is provided with a vertical adjusting mechanism 20 comprising an internally threaded hole 21 provided in the centre of the top 22 of the body 1, and an adjustment screw 23 which engages the internally threaded hole 21 and is in contact with the top 24 of the spacer 16.

In Figure 1, the valve seat 2 and the spacer 16 are both urged upwardly to their upper limits by the spring 14, and there is a clearance between the valve member 3 and the valse seat 2.

When a shut-off valve (not shown) of the gas apparatus is opened in the state mentioned above, gas flows at a minimum flow rate through the clearance between the valve member 3 and the valve seat 2 even if the solenoid 4 is not excited. A gas water heater operating when gas is flowing at the minimum flow rate will now be discussed. If the water temperature detected by the detector of the gas water heater is lower than a desired value (preset value), the adjusting portion of a control system delivers a signal, corresponding to the difference between the desired value and the detected value, to the actuator (solenoid 4) in order to increase the flow rate of gas. Then, the solenoid 4 is excited by the input signal, and attracts the plunger 5. the valve member 3 is displaced to a position where the force of the spring 6 is balanced by the total of the attracting force of the solenoid 4 and the force exerted on the valve member 3 by the pressure difference between portions before and after the valve. The displacement of the valve member 3 increases the clearance between the valve member 3 and the valve seat 2 so as to increase the flow rate of gas. With the increase of the flow rate of gas, the water temperature rises. As the water temperature approaches the desired value, the input signal of the solenoid 4 becomes smaller, and the attracting force thereof become smaller as compared with the counterforce of the spring 6. Thus, the plunger 5 moves outwardly from the solenoid 4 so as to displace the valve member 3 to a position where the force of the spring 6 is balanced by the total of the attracting force of the solenoid 4 and the force exerted on the valve member 3 by the pressure difference between portions before and after the valve. Now the clearance between the valve member 3 and the valve seat 2 becomes smaller.

Let us suppose that the above is a case of a gas having a small heating value per unit volume (hereinafter referred to as a « low-calorie gas »). There will now be described a case where the low-calorie gas is changed to a gas having a high heating value per unit volume (hereinafter referred to as a « high-calorie gas »).

To be brief, the minimum heat flow rate of the high-calorie gas is larger than that of the low-calorie gas if the clearance (open area) between the valve member 3 and the valve seat 2 is the same. Needless to say, it is desirable that the minimum heat flow rate of gas remains the same even when the kind of gas has been changed. In conventional devices, the minimum flow rate of gas has been adjusted either by replacing a bypass provided in the addition to the main valve, or by readjusting a needle valve provided in the bypass.

In the present invention, it is possible to adjust the clearance between the valve member 3 and the valve seat 2 by turning a handle 25 fastened to said adjustment screw 23 either by means of a screw or by caulking. When the handle 25 is turned, the adjustment screw 23 and the spacer 16 move vertically so as to move the valve seat 2 vertically to change said clearance. Furthermore, the body 1 is provided with a pair of stoppers (not shown) which are adapted to stop the turning of the handle 25 when the tip 27 of the handle 25 contacts one of the stoppers.

To make it possible to adjust the clearance between the valve member 3 and the valve seat 2 according to the kind of gas used by turning the handle 25 and without any bypass, the positions of the stoppers and the pitch of the adjustment screw 23 should be such that said clearance gives a minimum flow rate suitable for a gas having the smallest heating value per unit volume when the tip 27 of the handle 25 is in contact with one of the stoppers, and said clearance gives a minimum flow rate suitable for a gas having the largest heating value per unit volume when the tip 27 of the handle 25 is in contact with the other stopper on the opposite side.

If marks are put on the shoulder portion 28 of the body 1, each indicating one of the kinds of gases, it is possible to obtain a minimum flow rate suitable for a gas to be used by adjusting the tip 27 of the handle 25 to a mark corresponding to the particular gas.

Figure 4 shows a modified example of the present invention wherein a spacer 16' is adapted to be moved vertically by means of a steel ball disposed centrally on top of the spacer and a screw with a taper portion is disposed in the upper portion of the body 1.

The lower end of the spacer 16' in Figure 4 is kept in contact with the upper circumference of the valve seat 2. The spacer 16' is provided on its side facing the gas inlet 9 with an opening 17', and in the centre on its top 24' with a recess 29 in which is located a steel ball 30 disposed between the spacer top 24' and the body top 22. Provided beside the recess 29 is a positioning hole 31 into which a guide pin 32 protruding from the body top 22 is inserted. A vertical adjusting mechanism 20' for the spacer 16' in this example further comprises an internally threaded hole 33 provided transversely in the body top 22, and an adjustment screw 23' in engagement with the internally threaded hole 33 and provided with a taper portion 34 contacting said steel ball 30. In Figure 4, the valve seat 2 and the spacer 16' are both urged upwardly to their upper limits by the spring 14, and there is a clearance between the valve member 3 and the valve seat 2. When the shut-off valve of the gas apparatus is opened in this state, gas flows at a minimum flow rate through the clearance between the valve member 3 and the valve seat 2 even if the solenoid 4 is not excited.

When a low-calorie gas is to be changed to a high-calorie gas, the adjustment screw 23' is turned so as to move the spacer 16' downwards through the intermediary of the taper portion 34 and the steel ball 30. By the downward movement of the spacer 16', the valve seat 2 is moved down against the force of the spring 14. Thus, the clearance between the valve seat 2 and the valve member 3 becomes smaller and gives a minimum flow rate suitable for the high-calorie gas. Said clearance can be changed freely by turning the adjustment screw 23'.

The spacer 16' does not hinder the flow of gas because it is of a cylindrical shape with an open lower end and has the opening 17' in its side. The guide pin 32 protruding from the body top 22 and inserted into the positioning hole 31 of the spacer top 24' positions the opening 17' to coincide with the gas inlet 9 of the body 1 at the time of assembly, and guides the vertical movement of the spacer 16' smoothly. Also, because the steel ball 30 is set in the recess 29 in the centre of the spacer top 24' and the taper portion 34 of the adjustment screw 23' is in contact with the steel ball 30, it is possible to move down the spacer 16' in small increments and with accuracy by turning the adjustment screw 23'.

The means described above ensure a pertinent minimum flow rate according to the kind of gas which is being used.

Means will now be described for obtaining a pertinent maximum flow rate according to the kind of gas to be used.

Needless to say, it is desirable that a maximum heat flow rate does not change according to the kind of gas used. Therefore, the valve seat 2 should have an inside diameter Di suitable for a gas having the smallest heating value per unit volume. Because the supply pressure and nozzle pressure of gas differ according to the kinds of gases, the pressure loss caused by the proportional control valve also differs according thereto. In short, in the case of any flow rate, the pressure loss caused by the proportional control valve (hereinafter referred to as « $\Delta Pv$ ») is equal to the supply pressure of gas minus the pressure required to pass the gas through the nozzle.

$\Delta Pv$ differs according to the kinds of gases also when gas is flowing at a minimum flow rate. Reference will now be made to the case where the valve member 3 starts moving when gas has been flowing at the minimum flow rate.

There is a pressure difference $\Delta Pv$ between portions before and after the valve member 3, and thereby force F ($F = \pi/4\ Dv^2\ \Delta Pv$ where « Dv » is the outside diameter of the valve member 3) is exerted on the valve member 3. In the invention, the direction of the force F exerted on the valve member 3 is the same as the direction of the attracting force of the solenoid 4.

If the spring 6 is adapted to have a counterforce larger than the force F exerted on the valve member 3, the valve member 3 does not move and gas flows only at the minimum flow rate when no electric current flows through the solenoid 4. When electric current flows through the solenoid 4, the attracting force thereof is exerted on the plunger 5. When the total of the attracting force of the solenoid 4 and the force F exceeds the counterforce of the spring 6, the valve member 3 starts to move. Thus, the electric current flowing through the solenoid 4 at the time when the valve member 3 starts to move (Hereinafter referred to as « starting current ») depends upon the force F exerted on the valve member 3. This means that the starting current depends upon the kind of gas.

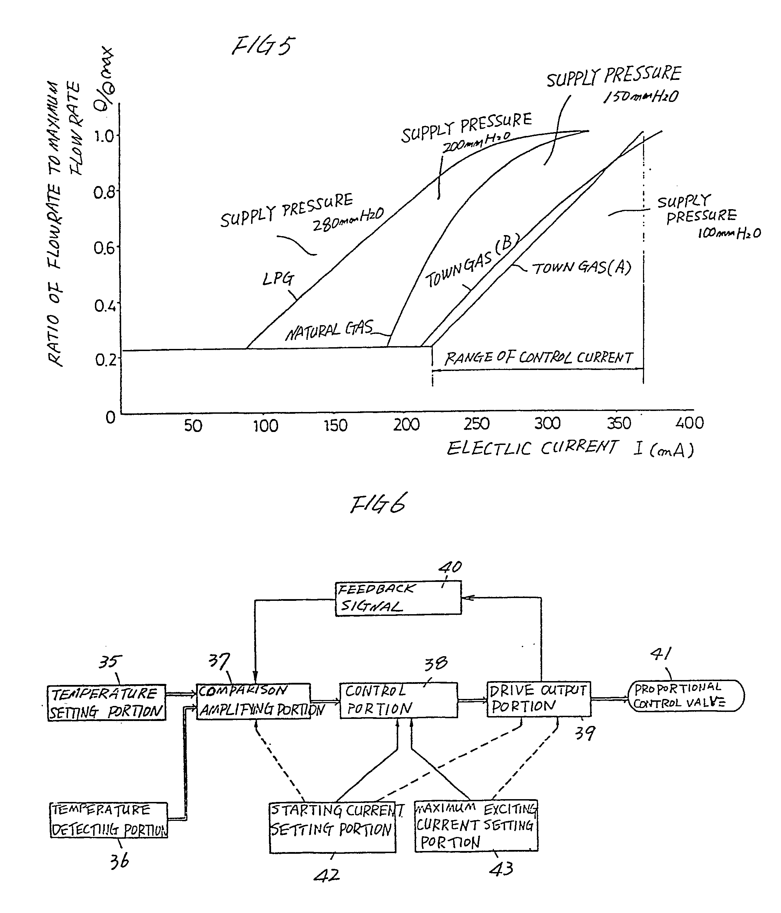

If a valve member and a valve seat designed so as to suit a certain kind of gas are used for other kinds of gases, the relationship between the heat flow rate of gas and the input signals of the solenoid 4 from the minimum flow rate to the maximum flow rate, as well as the starting current, becomes different from those in the original kind of gas. Figure 5 shows the expected relation between the flow rates of various kinds of gases and control current in the case where the valve member 3 and the valve seat 2 (Figure 1) designed so as to suit town gas (A) are used.

As will be apparent from the above, it is possible to use the same valve member and the same valve seat for all kinds of gases if the range of control current (the range from said starting current to current giving a maximum flow rate) is changed according to the kind of gas being used by changeover means in a control system.

The means for changing the range of control current within a proportional control system will now be described.

Figure 6 is a block diagram of the proportional control system which includes, as conventional proportional control systems do, a temperature setting means 35, a temperature detecting sensor 36, a comparison amplifier 37, a control means 38, a drive means 39, a feedback signal 40 and a proportional control valve 41. In addition to these, the proportional control system of the invention has a starting current setting means 42 and a maximum exciting current setting means 43.

The starting current setting means 42 applies a DC bias to a signal system as shown in Figure 8 (A), (B) to ensure that the electric current applied to the proportional control valve 41 is not below the starting current. Possible means for changing the starting current level include free changeover by means of a variable resistor VR as shown in Figure 8 (A) and n-stepped changeover by means of a rotary switch RS and an n-number of resistors $R_1$, $R_2'$... $R_n$ as shown in Figure 8 (B).

The maximum exciting current setting portion 43 sets the maximum exciting current for instance by clipping electric signal waves at a level corresponding to the maximum exciting current of a control signal by means of a clipping circuit comprising a Zener diode, or by making the drive means 39 control electric current. The maximum exciting current level can be changed by means of the changeover circuits shown in Figure 8 (A), (B).

It is to be noted that, while the control system is usable as it is both for town gas (A) and town gas (B), it needs two additional changeover means for natural gas and LPG as shown in Figure 5.

Regarding the change of gas owing to the change of energy situation or the increase of urban population, it is often known in advance as to which kind of gas will replace the existing gas and how soon such replacement will take place. One way of coping with the anticipated change of gas is to use a valve member and a valve seat suitable for both the gas used at present and the gas to be used in future, and provide the control system with a means for changing the range of control current. If the possibility of the change of gas is considered to be very small, it is advantageous, in view of simplifying the control system and reducing the cost, to pre-design the control system so as to give only one range of control current suitable only for the gas used at present, and use a valve member and a valve seat suitable only therefor.

Figure 9 is a diagram showing the relation between the input signal of the actuator (solenoid) and the ratio of flow rate to the maximum flow rate. Values shown therein have been calculated under the following conditions :

Town gases (A), (B), (C) : A valve member and a valve seat designed for town gas (C) are used. The same range of control current is used.

Natural gas : The same valve member and valve seat as above are used. The range of control current is changed.

LPG : A valve member and a valve seat designed for LPG are used. The range control current is the same as for the natural gas.

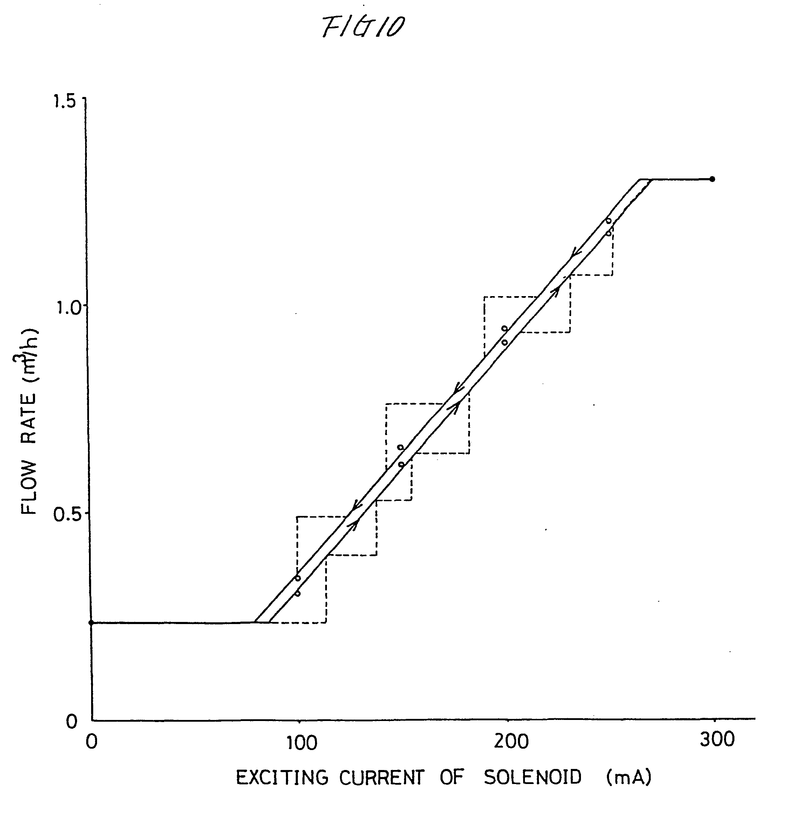

Figure 10 is a diagram showing the relation between the input signal of the actuator and the flow rate of the LPG in Figure 9. Values shown therein were obtained in an experiment.

The solid lines in Figure 10 show said relation obtained when the plunger 5 in Figure 1 is operated smoothly and in accordance with the exciting current of the solenoid 4. As mentioned before, the valve member 3 stops in a position where the total of the attracting force of the solenoid 4 and the force exerted on the valve member 3 by said pressure difference is equal to the counterforce of the spring 6. In this state, force exerted on the valve member 3 is zero. Therefore, if there is any slight friction on the bearing of the plunger 5 or the bearing of the valve stem 7, the performance characteristics of the plunger 5 (the relation between the input signal of the actuator and the stroke of the plunger 5, that is, the relation between said input signal and the flow rate of gas) become unstable.

The dotted lines in Figure 10 show the relation between the input signal of the actuator and the flow rate of gas when the input signal of the actuator was continuously changed in the case where the performance characteristics of the plunger 5 were unstable. If the performance characteristics of the plunger 5 are unstable, response to the input signal of the actuator is delayed, and output (for instance water temperature in the case of a gas water heater) becomes unstable.

The instability of the output is probably attributable to the design of the control system or to the proportional control valve. When it is attributable to the proportional control valve, the probable cause is that the plunger 5, valve stem 7 and valve member 3 are not in alignment with one another or with the valve seat 2 or they are not perpendicular to the valve seat 2, or that there is friction on the bearing of the plunger 5 or the bearing of the valve stem 7.

In a proportional control valve having a poppet valve or a female conical valve, if the valve member is out of alignment with the valve seat or inclined with relation thereto, the valve member contacts the wall of the valve seat and therefore the performance characteristics of the plunger are affected. In a proportional control valve having a flat valve, if the valve member is in said state, the open area between the valve member and the valve seat becomes irregular and therefore the output becomes unstable particularly when the flow rate of gas is low.

Also if the plunger 5 is inclined and comes into unstable contact with a sleeve 44 fitted in a bobbin 45, the performance characteristics of the plunger 5 are affected irrespective of the shapes of the valve member and valve seat.

Therefore, the inclination of the plunger 5

owing to the clearance between the plunger 5 and bearings must be decreased.

It is possible to decrease the inclination of the plunger 5 by decreasing the clearance between the outer surface of the plunger 5 and the inner surfaces of the bearings. If only one bearing is used, it is generally necessary to decrease the clearance between the outer surface of the plunger 5 and the inner surface of the bearing, and lengthen the bearing. Therefore, in this case, both the outer surface of the plunger 5 and the inner surface of the bearing must be finished very accurately. If they are finished roughly, the contact between the plunger 5 and the bearing affects the performance characteristics of the plunger 5 particularly when the bearing is long and the plunger 5 is inclined. It is desirable that the contact between the plunger 5 and the bearing is linear or almost linear.

In view of the above, the invention utilises bearings as follows :

1) Two bearings (upper bearing and lower bearing) are used for movable members including the valve stem and the plunger.

2) The distance between the upper bearing and the lower bearing is as long as possible in the proportional control valve.

3) Each of the two bearings is as short as possible. The contact between the movable members (valve stem and plunger) and the bearings is linear or almost linear.

4) The clearance between the outer surface of the plunger and the inner surfaces of the bearings is such that the plunger does not contact any portions other than the bearings even if the plunger is inclined to the limit when accumulated tolerance is the largest.

The bearings in the proportional control valve will now be described in detail with reference to Figures 11 to 14.

Two bearings 46, 47 for the movable members including the valve stem 7 and the plunger 5 are disposed one above the other and as far apart as possible from each other. The clearance between the outer surface of the plunger 5 and the inner surfaces of the bearings 46, 47 is such that the plunger 5 does not contact any portions other than the bearings 46, 47 even if the plunger 5 is inclined to the limit when accumulated tolerance is the largest. The contact between the movable members and the bearings 46, 47 is linear or almost linear so as to reduce friction. As shown in Figure 11, the upper bearing 46 comprises an annular projection 48, semicircular in vertical section, formed on the inner surface 49 of an adjustment screw 50, said annular projection 48 being in contact with the valve stem 7. The lower bearing 47 comprises a cylindrical inner surface 52 of an adjustment screw 53 which is in contact with a spherical end 51 of the plunger 5.

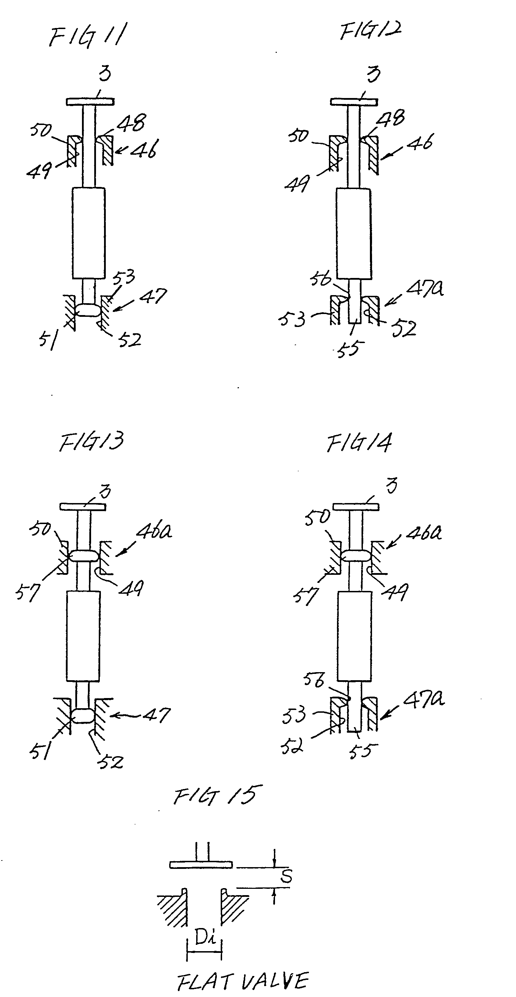

The upper bearing 46 and the lower bearing 47 are not restricted to the example shown in Figure 11, and may be modified, for example, as shown in Figures 12 to 14. In Figure 12, the same upper bearing 46 as in Figure 11 is used, and a lower bearing 47a comprises an annular projection 56, semicircular in vertical section, formed on the inner surface 52 of the adjustment screw 53, said annular projection 56 being in contact with a rod 55 fixedly extending from the lower end of the plunger 5. In Figure 13, an upper bearing 46a comprises an inner surface 49 of the adjustment screw 50 which is in contact with an annular projection 57 formed intermediate the ends of the valve stem 7, while the same lower bearing 47 as in Figure 11 is used. In Figure 14, the same upper bearing 46a as in Figure 13 and the same lower bearing 47a as in Figure 12 are used. Any other bearing (not shown) may be used as long as it gives substantially linear contact.

## Claims

1. A proportional control valve for gas, adapted to control the flow rate of gas by controlling the clearance between a valve member (3) and a valve seat (2) and provided with an actuator (4) such as a solenoid for actuating said valve member, said clearance being adjusted from the outside of a valve body (1) by moving said valve seat relative to said valve member, characterized in that a spacer (16) having a shape which does not hinder the flow of gas is disposed within an upper valve chamber (11) upstream from said valve seat, a spring (14) for urging said valve seat upwardly so as to keep the top of said valve seat in contact with the bottom of said spacer is disposed within a lower valve chamber (12) downstream from said valve seat, and said valve body (1) is provided at its top with a vertical adjusting mechanism (20) for controlling the minimum clearance between said valve member and said valve seat by vertically moving said spacer (16) according to the kind of gas for which the valve is to be used.

2. A proportional control valve for gas as claimed in Claim 1, wherein said spacer (16) has a cylindrical shape with an open lower end, said spacer being provided on its sides with an opening (17) for the inflow of gas and a pair of ribs (18) engaging with guide slots (19) formed on the inner wall of said valve chamber (11), said vertical adjusting mechanism (20) for said spacer comprising an internally threaded hole (21) provided in the centre of the top (22) of said body (1) and an adjustment screw (23) engaging with said internally threaded hole and being in contact with the top (24) of said spacer.

3. A proportional control valve for gas as claimed in Claim 1, wherein said spacer has a cylindrical shape with an open lower end, said spacer being provided on its top (24') with a positioning hole (31) and on its side with an opening (17') for the inflow of gas, said vertical adjusting mechanism for said spacer comprising a steel ball (30) disposed in the centre of the top of said spacer, an adjustment screw (23') with a taper portion disposed in an upper portion of said valve body (1) so as to contact said steel ball, and a pin (32) protruding downwardly from said valve chamber (11) so as to be inserted into said positioning hole (31) of said spacer.

4. A proportional control valve as claimed in Claim 1, wherein the valve comprises a movable member (5, 7, 55) supported by means of bearings (46, 46a and 47, 47a) disposed at spaced intervals from each other, said movable member being in linear or substantially linear contact with said bearings.

5. A proportional control valve as claimed in Claim 4 wherein the clearance between the outer surface of said movable member (5, 7, 55) and the inner surfaces of said bearings (46, 46a, 47, 47a) is such that said movable member does not contact any portions other than said bearings even if said movable member is inclined to the limit when accumulated tolerance is greatest.

6. A proportional control valve as claimed in any one of Claims 1 to 5, wherein the same valve member and the same valve seat are adapted to be used for different gases.

7. A proportional control valve as claimed in any preceding claim, comprising a solenoid actuator and means for changing the range of control current supplied to the actuator to cope if necessary with a change of gases.

8. A proportional control system for gas comprising a valve with a solenoid actuator according to any preceding claim, characterised in that there are provided means for changing the range of control current to said actuator according to the kind of gas used.

**Ansprüche**

1. Proportionales Steuerventil für Gas zum Steuern der Strömungsgeschwindigkeit von Gas durch Steuern des Spaltes zwischen einem Ventilglied (3) und einem Ventilsitz (2), das mit einem Betätigungselement (4), beispielsweise Solenoid, zum Betätigen des Ventilgliedes (3) versehen ist, wobei der Spalt von außerhalb eines Ventilgehäuses (1) durch Bewegen des Ventilsitzes relativ zum Ventilglied eingestellt wird, dadurch gekennzeichnet, daß ein Abstandsring (16), der eine den Gasstrom nicht behindernde Form aufweist, in einer oberen Ventilkammer (11) stromauf des Ventilsitzes angeordnet ist, daß eine Feder (14), die den Ventilsitz derart nach oben vorspannt, daß seine Spitze an dem Boden des Abstandsringes anliegt in einer unteren Ventilkammer (12) stromabwärts des Ventilsitzes angeordnet ist, und daß das Ventilgehäuse (1) an seiner Oberseite mit einem vertikalen Justiermechanismus (20) versehen ist, um den kleinsten Spalt zwischen dem Ventilglied und dem Ventilsitz durch vertikale Bewegung des Abstandsringes (16) entsprechend der Gasart, für die das Ventil verwendet wird, zu steuern.

2. Proportionales Steuerventil für Gas nach Anspruch 1, dadurch gekennzeichnet, daß der Abstandsring (16) eine zylindrische Form mit einem offenen unteren Ende aufweist, an seinen Spitzen mit einer Öffnung (17) für das Einströmen von Gas und mit zwei Rippen (18) versehen ist, die in Führungsschlitze (19) in der Innenwand der Ventilkammer (11) eingreifen, und daß der vertikale Justiermechanismus (20) für den Abstandsring eine Innengewindebohrung (21) in der Mitte der Oberseite (22) des Gehäuses (1) und eine Justierschraube (23) die in der Innengewindebohrung eingreift und die Oberseite (24) des Abstandsringes berührt, aufweist.

3. Proportionales Steuerventil für Gas nach Anspruch 1, dadurch gekennzeichnet, daß der Abstandsring eine zylindrische Form mit offenem unterem Ende aufweist, an seiner Oberseite (24') mit einem Positionierloch (31) und an seiner Seite mit einer Öffnung (17') für das Einströmen des Gases versehen ist, und daß der vertikale Justiermechanismus für den Abstandsring eine Stahlkugel (30) in der Mitte der Oberseite des Abstandsringes, eine Justierschraube (23') mit einem kegelförmigen Teil, die im oberen Teil des Ventilgehäuses (1) so angeordnet ist, daß sie die Stahlkugel berührt, und einen Stift (32) aufweist, der von der Ventilkammer (11) nach unten vorsteht, um in das Positionierloch (31) des Abstandsringes eingesetzt zu werden.

4. Proportionales Steuerventil nach Anspruch 1, dadurch gekennzeichnet, daß das Ventil ein bewegbares Glied (5, 7, 55) aufweist, welches durch in Abständen zueinander liegende Lager (46, 46a und 47, 47a) gelagert ist, wobei das bewegbare Glied mit den Lagern linear oder im wesentlichen linear in Berührung steht.

5. Proportionales Steuerventil nach Anspruch 4, dadurch gekennzeichnet, daß der Spalt zwischen der Außenfläche des bewegbaren Gliedes (5, 7, 55) und den inneren Flächen der Lager (46, 46a, 47, 47a) so bemessen ist, daß das bewegbare Glied keine anderen Teile als die Lager berührt, selbst wenn das bewegbare Glied bis zur Grenze, bei der die summierte Toleranz am größten ist, geneigt ist.

6. Proportionales Steuerventil nach jedem der vorstehenden Ansprüche 1 bis 5, dadurch gekennzeichnet, daß dasselbe Ventilglied und derselbe Ventilsitz für verschiedene Gase verwendbar ausgebildet sind.

7. Proportionales Steuerventil nach jedem der vorstehenden Ansprüche, gekennzeichnet durch ein Betätigungssolenoid und Mittel zum Verändern des Bereiches des dem Betätigungselement zugeführten Steuerstroms zur erforderlichenfalls erforderlichen Anpassung an verschiedene Gase.

8. Proportionales Steuersystem für Gas mit einem Ventil mit einem Betätigungssolenoid, nach jedem der vorstehenden Ansprüche, dadurch gekennzeichnet, daß Mittel zum Verändern des Bereiches des Steuerstroms für das Betätigungselement gemäß der verwendeten Gasart vorgesehen sind.

**Revendications**

1. Vanne de réglage proportionnel pour gaz, qui permet de déterminer le débit de gaz par réglage de l'intervalle entre un obturateur (3) et un siège (2) et qui comporte un servomoteur (4), tel qu'un solénoïde, pour actionner l'obturateur, ledit intervalle étant réglé de l'extérieur d'un corps de vanne (1) par déplacement du siège par rapport à l'obturateur, caractérisée en ce qu'une entretoise (16), ayant une configuration qui ne gêne pas l'écoulement du gaz, est disposée dans une chambre supérieure (11) à l'amont du siège, un ressort (14) pour pousser le siège vers le haut afin de maintenir le sommet du siège en contact avec la base de l'entretoise est placé dans une chambre inférieure (12) à l'aval du siège, et le corps de vanne (1) comporte à sa partie supérieure un mécanisme (20) de réglage vertical, pour déterminer le jeu minimal entre l'obturateur et le siège par déplacement vertical de l'entretoise (16) en fonction du type de gaz pour lequel la vanne doit être utilisée.

2. Vanne de réglage proportionnel pour gaz suivant la revendication 1, dans laquelle l'entretoise (16) est de forme cylindrique avec une extrémité inférieure ouverte, l'entretoise comportant sur sa face latérale une ouverture (17) pour l'entrée du gaz et deux nervures (18) qui s'engagent dans des rainures de guidage (19) prévues dans la paroi intérieure de la chambre (11), le mécanisme (20) de réglage vertical de l'entretoise comprenant un trou taraudé (21) prévu au centre de la partie supérieure (22) du corps (1) et une vis de réglage (23) vissée dans le trou taraudé et en contact avec le sommet (24) de l'entretoise.

3. Vanne de réglage proportionnel pour gaz, suivant la revendication 1, dans laquelle l'entretoise est de forme cylindrique avec une extrémité inférieure ouverte, l'entretoise comportant à son sommet (24') un trou de centrage (31) et sur sa face latérale une ouverture (17') pour l'entrée du gaz, le mécanisme de réglage vertical de l'entretoise comprenant une bille (30) en acier placée au centre du sommet de l'entretoise, une vis de réglage (23') comportant une partie conique et disposée dans une partie supérieure du corps de vanne (1) de façon à être en contact avec la bille en acier, et une tige (32) qui fait saillie vers le bas dans la chambre (11) de façon à être insérée dans le trou de centrage (31) de l'entretoise.

4. Vanne de réglage proportionnel suivant la revendication 1, dans laquelle la vanne comprend un élément mobile (5, 7, 55) supporté au moyen de portées (46, 46a et 47, 47a) disposées à distance les unes des autres, ledit élément mobile étant en contact linéaire ou sensiblement linéaire avec les portées.

5. Vanne de réglage proportionnel suivant la revendication 4, dans laquelle le jeu entre la surface extérieure de l'élément mobile (5, 7, 55) et les surfaces intérieures des portées (46, 46a, 47, 47a) est tel que l'élément mobile n'est pas en contact avec d'autres parties que les portées, même si l'élément mobile est incliné à la limite lorsque la tolérance accumulée est la plus grande.

6. Vanne de réglage proportionnel suivant l'une quelconque des revendications 1 à 5, dans laquelle le même obturateur et le même siège sont adaptés pour être utilisés avec différents gaz.

7. Vanne de réglage proportionnel suivant l'une quelconque des revendications précédentes, comprenant un servo-moteur à solénoïde et des moyens de modification de la plage du courant de commande envoyé au servomoteur, pour tenir compte si nécessaire d'un changement de gaz.

8. Système de réglage proportionnel pour gaz, comprenant une vanne avec un servomoteur à solénoïde, suivant l'une quelconque des revendications précédentes, caractérisé en ce que des moyens sont prévus pour modifier la plage du courant de commande du servomoteur, en fonction du type de gaz utilisé.

# FIG.1

GAS INLET

$D_i$

GAS OUTLET

# FIG.2

# FIG.3

# FIG.4

GAS INLET

GAS OUTLET

## FIG 5

RATIO OF FLOWRATE TO MAXIMUM FLOW RATE

%max

1.0

0.8

0.6

0.4

0.2

0

SUPPLY PRESSURE 150mmH₂O

SUPPLY PRESSURE 200mmH₂O

SUPPLY PRESSURE 280mmH₂O

SUPPLY PRESSURE 100mmH₂O

LPG

NATURAL GAS

TOWN GAS (B)

TOWN GAS(A)

RANGE OF CONTROL CURRENT

50  100  150  200  250  300  350  400

ELECTLIC CURRENT I (mA)

## FIG 6

40 FEEDBACK SIGNAL

35 TEMPERATURE SETTING PORTION

37 COMPARISON AMPLIFYING PORTION

38 CONTROL PORTION

DRIVE OUTPUT PORTION

41 PROPORTIONAL CONTROL VALVE

39

36 TEMPERATURE DETECTING PORTION

42 STARTING CURRENT SETTING PORTION

43 MAXIMUM EXCITING CURRENT SETTING PORTION

0 043 256

FIG 7

FIG 8

(A)          (B)

SIGNAL ≫ (SIGNAL + BIAS)

BIAS

VR

BIAS

RS

R1  R2    Rn

BIAS

FIG 9

NATURAL GAS

LPG

TOWN GAS (B)

TOWN GAS (A)

TOWN GAS (C)

ELECTRIC CURRENT I (mA)

4

*FIG 10*

FIG 11

3

50
49
48
46

53
47
51
52

FIG 12

3

50
49
48
46

56
53
47a
52
55

FIG 13

3

50
57
46a
49

47
51
52

FIG 14

3

50
57
46a
49

56
53
47a
52
55

FIG 15

S

Di

FLAT VALVE